(19) **Europäisches Patentamt**
**European Patent Office**
**Office européen des brevets**

(11) **EP 2 557 184 A1**

(12) **EUROPÄISCHE PATENTANMELDUNG**

(43) Veröffentlichungstag:
**13.02.2013 Patentblatt 2013/07**

(21) Anmeldenummer: **11177111.9**

(22) Anmeldetag: **10.08.2011**

(51) Int Cl.:
*C21D 8/06* (2006.01)   *C21D 8/08* (2006.01)
*C22C 38/00* (2006.01)   *C22C 38/04* (2006.01)
*C22C 38/14* (2006.01)   *C22C 38/32* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Swiss Steel AG**
**6020 Emmenbrücke (CH)**

(72) Erfinder: **Die Erfindernennung liegt noch nicht vor**

(74) Vertreter: **Schmauder & Partner AG**
**Patent- & Markenanwälte VSP**
**Zwängiweg 7**
**8038 Zürich (CH)**

(54) **Warmgewalzte, profilierte Stahlbewehrung für Stahlbetonteile mit verbessertem Feuerwiderstand und Verfahren zu deren Herstellung**

(57)   Eine Stahlbewehrung für Stahlbetonteile ist gebildet aus warmgewalzten profilierten Stahlelementen mit einem Gewichtsanteil von
- 0.06 bis 0.20% Kohlenstoff (C),
- 0.05 bis 0.80% Silizium (Si),
- 1.50 % < Mangan (Mn) + Chrom (Cr) < 3.00%
- bis zu 0.40% Nickel (Ni),
- bis zu 0.50% Molybdän (Mo),
- bis zu 0.30% Kupfer (Cu),
- bis zu 0.05% Schwefel (S),
- bis zu 0.10% Titan (Ti),
- bis zu 0.003 % Bor (B),
- bis zu 0.06 % Vanadium (V),

- bis zu 0.06 % Niob (Nb),
- bis zu 0.04% Aluminium (A1),
- bis zu 0.05% Phosphor (P),
- 0.008 bis 0.015 % Stickstoff (N) der Rest Eisen sowie stahlübliche Verunreinigungen.

Die Stahlelemente haben ein über dem Querschnitt weitgehend homogenes Gefüge mit folgenden Gefügebestandteilen:
- 60 bis 95% oberer Bainit,
- bis zu 30% Ferrit,
- bis 10% Martensit und
- bis zu 5% Restaustenit.

Damit lassen sich Stahlbetonteile mit verbessertem Feuerwiderstand herstellen.

Fig.3

**Beschreibung**

Technisches Gebiet

Die Erfindung betrifft eine Stahlbewehrung gemäss Oberbegriff des Anspruchs 1 sowie ein Verfahren zu deren Herstellung.

Stand der Technik

Bewehrungsstähle sind normierte Walzdraht- und Stabstahlprodukte, die z.B. in Form von geschweissten oder gebundenen Betonstahlmatten und Gitterträgern in Betonkonstruktionen für Hoch- und Tiefbau eingesetzt werden. Abhängig von der Gefährdung im Brandfall werden für die Betonstrukturen Vorgaben für die Feuerwiderstandsklasse festgelegt. Die Feuerwiderstandsklasse wird in einem Normbrandversuch (z.B. nach DIN 4102) ermittelt. Das Bauteil wird dabei einer genormten Einheits-Temperaturzeitkurve (ETK) ausgesetzt. Die resultierende Feuerwiderstandsdauer besagt, wie lange das Bauteil die geforderten Bauteileigenschaften (Tragfähigkeit, Massstabilität, Temperatur) beibehält. In geschlossenen Räumen können im Brandfall weit höhere Temperaturen als gemäss ETK auftreten. Das deutsche Eisenbahn-Bundesamt sieht deshalb eine schärfere Temperatur-Zeit-Kurve im Brandversuch vor (die EBA-Kurve).

Aufgrund steigender Sicherheitsbedürfnisse sind die Anforderungen an die Feuerwiderstandsdauer zunehmend. Dies spiegelt sich auch in neueren Werkstoffentwicklungen wider. Zum Beispiel ist bei ungeschützten Stahlkonstruktionen, die einem Feuer ohne Betonhülle ausgesetzt sind, der Einsatz von neuen warmfesten Stählen heute zu empfehlen. Warmfeste Stähle zeichnen sich dadurch aus, dass bei höheren Temperaturen Ausscheidungen (in der Regel Karbide) gebildet werden. Die Ausscheidungshärtung verlangsamt den bei steigenden Temperaturen auftretenden Festigkeitsverlust des Stahls. Entsprechende Stahlkonzepte wurden in den letzten Jahren für geschweisste Stahlstrukturen (insbesondere für Stahlträger), die einem Feuer direkt ausgesetzt sind, vorgeschlagen. Der Stahl muss so ausgelegt sein, dass die Qualität der Schweissnaht (Zähigkeit und Festigkeit) bis 1200°C erhalten bleibt.

Ferritische warmfeste Stähle enthalten in der Regel Molybdän als Karbidbildner. Aus Kostengründen wurden Mo-legierte Stähle in den letzten Jahren jedoch zunehmend durch günstigere Alternativen ersetzt. GB 2388845 beschreibt einen solchen Stahl, der zur Ausscheidungshärtung 0.1 bis 0.14 % Vanadium enthält. Im Brandfall wird die mechanische Stabilität für 30 Minuten gewährleistet.

Die Schwierigkeit besteht darin, dass sich die Karbidbildner tendenziell an den Korngrenzen anlagern, was eine Versprödung der Schweissnaht mit sich bringt. Dieses Problem wird durch eine optimale Zusammensetzung verschiedener Karbidbilder, die möglichste feine Karbide bilden sollen, gelöst. EP 2065481 beschreibt einen Stahl mit 0.03 bis 0.50% Niob und 50 bis 400 ppm Titan. Mit Hilfe einer Chromzugabe (US 2011/0002808) kann eine weitere Feinung der Ausscheidungen über die Bildung von zusätzlichen Chromkarbiden erreicht werden.

Prinzipiell können diese Konzepte auf Bewehrungsstähle übertragen werden. Aufgrund des verschiedenen Stahldesigns und der unterschiedlichen Temperaturbeaufschlagung im Brandfall ist das Potenzial für die Legierung mit Karbidbildnern jedoch in diesem Falle deutlich geringer. Bei reinen Stahlkonstruktionen werden schweissbare ferritische Stähle mit geringer Grundfestigkeit eingesetzt (typisch Stahl S355 nach EN10'025). Die Traglast wird über die Geometrie (bzw. Dimensionierung) der Stahlkonstruktion erreicht. Bei Stahlbetonteilen ist dies anders. Die stahlbewehrte Betonstruktur erhält ihre Zugfestigkeit durch einen kaltverfestigten (gereckten), "quasi-vergüteten" Armierungsstahl (typisch Stahl BSt500 nach DIN 488). Die vergütete Aussenhaut wird über eine beschleunigte Abkühlung aus der Warmumformung erreicht und verleiht der Bewehrung die notwendige Zugfestigkeit. Sowohl die durch das Recken eingebrachte Kaltverfestigung als auch die vergütete Aussenhaut sind thermisch wenig stabil, und die Streckgrenze nimmt schon bei geringer thermischer Belastung deutlich ab.

Die Feuerwiderstandsklasse einer stahlbewehrten Betonstruktur wird deshalb praktisch ausschliesslich über die Betonüberdeckung der Stahlarmierung eingestellt. Dabei ist die Feuerwiderstandsdauer von entscheidender Wichtigkeit für tragende Konstruktionen bei Bauten, die aufgrund ihrer Grösse nicht schnell evakuiert werden können (z.B. Tunnel). Vor dem Hintergrund zunehmend komplexerer Bauvorhaben (z.B. längere Tunnel, Tunnel unter Meeresspiegel) und steigender Sicherheitsanforderungen sind Lösungen zur Herstellung von Bewehrungen mit einem höheren Feuerwiderstand gesucht.

Darstellung der Erfindung

Aufgabe der Erfindung ist es, eine verbesserte Stahlbewehrung für Stahlbetonteile bereitzustellen, mit der eine deutliche Verlängerung der Feuerwiderstandsdauer erreicht wird.

Gelöst wird diese Aufgabe durch die im Anspruch 1 definierte Stahlbewehrung sowie durch das im Anspruch 11 definierte Herstellungsverfahren.

Die nachfolgenden Gehaltsangaben in Prozent (%) bzw. in Teilen pro Million ("parts per million, ppm") beziehen sich - sofern nicht ausdrücklich anders angegeben - auf Gewichtsanteile.

Die erfindungsgemässe Stahlbewehrung für Stahlbetonteile ist gebildet aus warmgewalzten profilierten Stahlelementen mit einem Gewichtsanteil von

- 0.06 bis 0.20% Kohlenstoff (C),
- 0.05 bis 0.80% Silizium (Si),
- 1.50 % < Mangan (Mn) + Chrom (Cr) < 3.00%
- bis zu 0.40% Nickel (Ni),
- bis zu 0.50% Molybdän (Mo),
- bis zu 0.30% Kupfer (Cu),
- bis zu 0.05% Schwefel (S),
- bis zu 0.10% Titan (Ti),
- bis zu 0.003 % Bor (B),
- bis zu 0.06 % Vanadium (V),
- bis zu 0.06 % Niob (Nb),
- bis zu 0.04% Aluminium (A1),
- bis zu 0.05% Phosphor (P),
- 0.008 bis 0.015 % Stickstoff (N)

der Rest Eisen sowie stahlübliche Verunreinigungen und ist gekennzeichnet durch ein über dem Querschnitt weitgehend homogenes Gefüge mit folgenden Gefügebestandteilen:

- 60 bis 95% oberer Bainit,
- bis zu 30% Ferrit,
- bis zu 10% Martensit und
- bis zu 5% Restaustenit.

Das Merkmal "profiliert" ist gerade auf dem Gebiet des Stahlbetons wohlbekannt und ist auch im vorliegenden Zusammenhang dahingehend zu verstehen, dass die Elemente der Stahlbewehrung im Querschnitt, d.h. in einer Ebene, die im Wesentlichen senkrecht zur lokalen Längsachsenrichtung steht, weder ein kreisrundes noch ein elliptisches Profil aufweisen. Vielmehr weisen Sie ein Profil mit mehr oder weniger ausgeprägten Vorsprüngen und/oder Vertiefungen auf, welche einerseits eine formschlüssige Verbindung mit dem umgebenden Beton und andererseits durch Vergrösserung der Kontaktoberfläche auch eine verbesserte kraftschlüssige Verbindung bewirken. Im Sinne der vorliegenden Erfindung bedeutet "profiliert", dass die Höhe der Vorsprünge bzw. Vertiefungen mindestens 0.5 mm und kumulativ dazu mindestens 5% des mittleren Durchmessers beträgt.

Vorzugsweise haben die Stahlelemente einen mittleren Durchmesser von 6 bis 40 mm.

Beim erfindungsgemässen Verfahren zur Herstellung von warmgewalzten profilierten Stahlelementen für eine erfindungsgemässe Stahlbewehrung wird ein Stahl mit einem Gewichtsanteil von:

- 0.06 bis 0.20% Kohlenstoff (C),
- 0.05 bis 0.80% Silizium (Si),
- 1.50 % < Mangan (Mn) + Chrom (Cr) < 3.00%
- bis zu 0.40% Nickel (Ni),
- bis zu 0.50% Molybdän (Mo),
- bis zu 0.30% Kupfer (Cu),
- bis zu 0.05% Schwefel (S),
- bis zu 0.10% Titan (Ti),
- bis zu 0.003 % Bor (B),
- bis zu 0.06 % Vanadium (V),
- bis zu 0.06 % Niob (Nb),
- bis zu 0.04% Aluminium (Al),
- bis zu 0.05% Phosphor (P),
- 0.008 bis 0.015 % Stickstoff (N)

der Rest Eisen sowie stahlübliche Verunreinigungen, einer Warmumformung bei 900 bis 1300°C unterzogen und danach an Luft abgekühlt,

- wobei die Abkühlung aus der Umformhitze an ruhender oder bewegter Luft so geschieht, dass der Temperaturbereich zwischen 800 und 500°C mit einer Kühlrate von 0.5 bis 3.0 K/s durchlaufen wird,

- wobei die mittlere Austenitkorngrösse nach dem letzten Warmumformungsschritt kleiner ist wie 50 µm, und
- wobei das erforderliche Festigkeitsniveau ohne zusätzliche Kaltumformung wie die sonst erforderliche Reckoperation oder dergleichen erreicht wird.

Bei der erfindungsgemäss hergestellten Stahlbewehrung sind die Legierungskomponenten so eingestellt, dass bei üblichen Abkühlraten aus der Walzhitze von 0.5 bis 3.0 K/s (von 800°C bis 500°C) immer ein dominant bainitisches Gefüge entsteht. Die Zusammensetzung des Stahls ist so gewählt, dass sich eine möglichst hohe Entstehungstemperatur (Bainit-Starttemperatur Bs) für das bainitische Gefüge ergibt. Bevorzugt soll eine Bs-Temperatur über 840 K erreicht werden. Das resultierende bainitische Stahlgefüge ist dann bei der Herstellung in-situ angelassen und thermisch stabiler als ein martensitisches Gefüge oder als ein Gefüge der unteren Bainitstufe. Es weist im Gegensatz zu einem konventionellen ferritischen Gefüge bereits ohne zusätzliche Reckoperation die notwendige Festigkeit auf und ist trotzdem so duktil, dass es für die Kaltumformung (Biegen oder Kaltwalzen) geeignet ist.

Gemäss einer vorteilhaften Ausgestaltung erfüllen die prozentualen Gewichtsanteile x(i) von Kohlenstoff, Mangan, Chrom, Nickel und Molybdän die folgende Bedingung:

$$840 < Bs = 1'103 - 270 \cdot x(C) - 90 \cdot x(Mn) - 70 \cdot x(Cr) - 37 \cdot x(Ni) - 83 \cdot x(Mo) < 950$$

Die in obiger Bedingung verwendete Masszahl Bs entspricht einem an sich bekannten Erfahrungsansatz für die Bainit-Starttemperatur in Kelvin [W. Steven, and A.J. Haynes, JISI 183, pp. 349-359 (1956)].

Es wurde gefunden, dass Betonstrukturen, die mit der erfindungsgemässen Stahlbewehrung verstärkt werden, einen verbesserten Feuerwiderstand aufweisen.

Durch die untere Begrenzung des Kohlenstoffgehalts auf 0.06 Gew.-% wird in Kombination mit Mangan und Chrom sichergestellt, dass sich nach der Abkühlung aus der Walzhitze an ruhender oder bewegter Luft ein dominant bainitisches Gefüge einstellt.

Durch die obere Begrenzung des Kohlenstoffs auf 0.20 Gew.-% wird gewährleistet, dass die 0.2%-Dehngrenze nicht über 750 MPa ansteigt. Ein hoher Kohlenstoffgehalt führt ausserdem zu einer tieferen Bs-Temperatur und verschlechtert damit die thermische Stabilität des Stahlgefüges.

Die Zugabe von Silizium ist nicht notwendig, um die gewünschten Eigenschaften zu erreichen. Silizium kann während der Stahlherstellung in geringen Mengen zur Desoxidation der Stahlschmelze verwendet werden. Eine dosierte Zugabe von Silizium unterdrückt ausserdem die Karbidbildung.

Die obere Begrenzung in Silizium von 0.80 Gew.-% stellt sicher, dass die Mischkristallverfestigung des Bainits und die damit verbundene Versprödung nicht dominant werden.

Durch die untere Begrenzung vom (Mangan + Chrom) auf 1.50 Gew.-% wird in Kombination mit Kohlenstoff sichergestellt, dass sich nach der Abkühlung aus der Walzhitze an ruhender oder bewegter Luft ein dominant bainitisches Gefüge einstellt. Bei tieferen (Mangan+Chrom)-Gehalten nimmt der Anteil an Ferrit im Gefüge zu und die guten Eigenschaften gehen verloren.

Insbesondere Mangan hat einen wesentlichen Einfluss auf die Bs-Temperatur. Tiefe Mangangehalte sind wünschenswert. Durch die obere Begrenzung in (Mangan + Chrom) auf 2.50 Gew.-% wird gewährleistet, dass kein Gefüge der unteren Bainitstufe entsteht.

Die Legierung mit Nickel ist kostspielig. Da Nickel keine Verbesserung der Warmfestigkeit bewirkt, wird dieses Element nicht zulegiert. Spuren bis maximal 0.40% Nickel sind dennoch möglich.

Molybdän bildet Karbide und verbessert damit die Warmfestigkeit des Stahls. Aus Kostengründen wird die Zugabe dennoch auf 0.50 Gew.-% begrenzt.

Ein erhöhter Kupfergehalt kann zu Rotbrüchigkeit während des Warmwalzens führen. Kupfer wird aus diesem Grund nicht legiert. Kupfer ist ein Begleitelement und ist auf 0.30 Gew.-% begrenzt.

Schwefel ist ein Stahlschädling. Es wird in Form von Mangansulfiden abgebunden oder geht an die Austenitkorngrenzen und schwächt das Gefüge. Aus diesem Grund wurde der Schwefelgehalt auf 0.05 Gew.-% begrenzt.

Die Zugabe von Titan ist vorteilhaft, aber nicht zwingend erforderlich. Titan wirkt in zweifacher Weise. Das in der Stahlmatrix gelöste Titan erleichtert die Einstellung des Bainitgefüges (es "erweitert das Bainitgebiet"). Damit ausreichend Titan gelöst bleibt, müssen dann mindestens 0.04 Gew.-% Titan zugegeben werden. Desweiteren stellt ein ausreichender Titangehalt sicher, dass der im flüssigen Stahl gelöste Stickstoff während der Erstarrung des Stahls in Form von Titankarbonitriden ausgeschieden wird. Dies ist die Voraussetzung dafür, dass elementares Bor an die Austenitkorngrenzen gelangen kann und nicht in Form von Bornitriden vorliegt.

Die obere Begrenzung in Titan von 0.10 Gew.-% stellt sicher, dass die vorliegenden Titankarbonitriden nicht zu sehr vergröbern und die Zähigkeit des Stahls verschlechtern.

In der Stahlmatrix gelöstes Bor unterdrückt die Ferritbildung während der Gefügeumwandlung. Insbesondere bei grossen Querschnitten der Stahlbewehrung bzw. bei geringen Abkühlraten aus der Umformhitze kann eine Borzugabe deshalb sinnvoll sein. Unter der Voraussetzung, dass der vorhandene Stickstoff in Titannitriden abgebunden ist, wird mit 0.0015 bis 0.0030 % Bor eine optimale Wirkung erreicht.

Vanadium und Niob bilden Nitridausscheidungen, die die Warmfestigkeit weiter verbessern. Im Vergleich zu konventionellen Stahlbetonteilen können damit filigranere Bauteile mit geringerer Betonüberdeckung und dennoch ausreichendem Feuerwiderstand realisiert werden. In solchen Fällen ist eine Zugabe von 0.02 bis 0.06 % Vanadium oder Niob ausreichend.

Die Zugabe von Aluminium ist für die erfindungsgemässe Herstellung des Produkts nicht zwingend. Falls eine spätere Wärmebehandlung des Produkts notwendig ist, dann kann die Austenitkornstabilität über eine Aluminiumzugabe gewährleistet werden. In diesem Fall sind Aluminiumgehalte von 0.02 bis 0.04 Gew.% üblich.

Phosphor ist ein Stahlschädling. Es geht an die Austenitkorngrenzen und schwächt das Gefüge. Aus diesem Grund wurde der Phosphorgehalt auf 0.05 Gew.-% begrenzt.

<u>Wege zur Ausführung der Erfindung</u>

Ausführungsbeispiele der Erfindung werden nachfolgend anhand der Zeichnungen näher beschrieben, dabei zeigen:

Fig. 1 das Verhältnis Rp0.2 (bei 400°C) / Rp0.2 (Raumtemperatur) in Abhängigkeit von der gerechneten Bs-Temperatur;

Fig. 2 ein Gefügebild von Stahl 1 (nach Ätzung in einer 2%-igen $HNO_3$Lösung);

Fig. 3 die Temperaturabhängigkeit der Streckgrenze von Stahl 1 im Vergleich zum Referenzstahl Bst500;

Fig. 4 eine schematische Darstellung der untersuchten Stahlbeton-Stützen;

Fig. 5 den Abfall der Knicklast im Brandfall nach 30, 60 und 90 Minuten (ermittelt nach EN 1992-1-2 Anhang B.3.2).

Die folgende Tabelle 1 zeigt die chemische Zusammensetzungen und die entsprechenden Bainitstarttemperaturen Bs von fünf Stählen, die nach dem konventionellen Warmwalzen (22 mm bzw. 17 mm Walzstahl) ein bainitisches Gefüge aufweisen.

## Tabelle 1: Chemische Zusammensetzung der untersuchten Stähle

| | Ø | Bs | Bainit-anteil | C | Si | Mn | Cr | Ni | Mo |
|---|---|---|---|---|---|---|---|---|---|
| | mm | K | % | % | % | % | % | % | % |
| Stahl 1* | 22 | 903 | 90 ± 3 | 0.06 | 0.22 | 1.91 | 0.08 | 0.15 | 0.02 |
| Stahl 2* | 17 | 855 | 80 ± 5 | 0.1 | 0.05 | 2.46 | 0.06 | 0.06 | <0.01 |
| Stahl 3 | 17 | 817 | 87 ± 4 | 0.1 | 0.05 | 2.88 | 0.06 | 0.05 | <0.01 |
| Stahl 4 | 17 | 771 | 90 ± 4 | 0.04 | 0.58 | 3.13 | 0.53 | 0.06 | <0.01 |
| Stahl 5 | 17 | 764 | 87 ± 4 | 0.09 | 0.11 | 3.26 | 0.05 | 0.06 | 0.18 |

| | Cu | S | Ti | B | V | Nb | Al | P | N |
|---|---|---|---|---|---|---|---|---|---|
| | % | % | % | % | % | % | % | % | % |
| Stahl 1* | 0.14 | <0.01 | 0.076 | 0.0025 | 0.042 | <0.01 | 0.028 | 0.006 | 0.01 |
| Stahl 2* | 0.02 | <0.01 | 0.024 | 0.0023 | <0.01 | <0.01 | 0.010 | 0.010 | 0.007 |
| Stahl 3 | 0.02 | <0.01 | 0.025 | 0.0025 | <0.01 | <0.01 | 0.008 | 0.010 | 0.006 |
| Stahl 4 | 0.02 | <0.01 | 0.021 | 0.0012 | <0.01 | <0.01 | 0.026 | 0.004 | 0.006 |
| Stahl 5 | 0.02 | <0.01 | 0.016 | 0.0015 | <0.01 | <0.01 | 0.051 | 0.004 | 0.006 |

*erfindungsgemäss

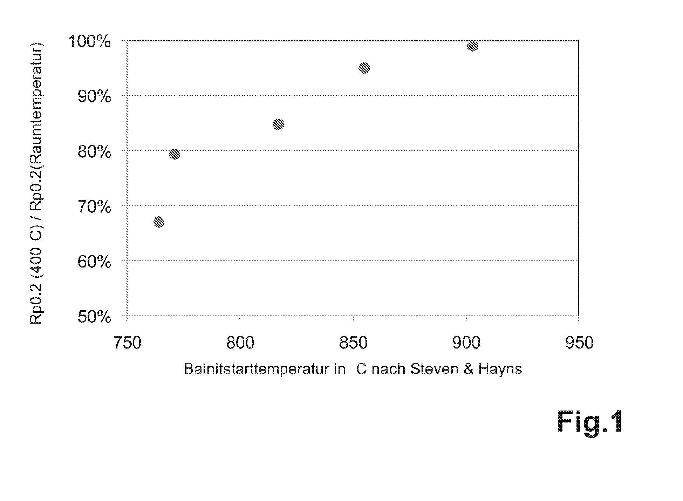

Das Verhältnis der Dehngrenzen Rp0.2 bei 400°C und bei Raumtemperatur in % ist ein Mass für die Temperaturbeständigkeit der Stähle. Referenzstahl BSt500 weist einen Wert von ca. 70% auf. In der Fig. 1 ist gezeigt, welche Werte mit bainitischen Stählen in Abhängigkeit der Bs-Temperatur erreicht werden können. Die Dehngrenze Rp0.2 von den erfindungsgemässen Stählen 1 und 2 ist bei 400°C noch über 90% des Wertes bei Raumtemperatur.

Die nicht-erfindungsgemässen Stähle 3-5 weisen dahingegen zu hohe (Mangan + Chrom)-Gehalte auf. Das vorliegende bainitische Gefüge entstand aus diesem Grund bei zu tiefen Temperaturen und ist nicht ausreichend in-situ angelassen worden. Bei Wiedererwärmung auf 400°C fällt die Dehngrenze Rp0.2 deshalb deutlich ab. Bei Stahl 5 liegt bereits eine andere Morphologie des Bainits vor. Es handelt sich um einen unteren Bainit, der ähnliche Eigenschaften wir ein martensitisches Gefüge aufweist. Dieser Stahl ist dem erfindungsgemäss hergestellten Stahl mit einem Gefüge der oberen Bainitstufe deutlich unterlegen

Im Nachfolgenden ist ein Ausführungsbeispiel mit Stahl 1 für stahlbewehrten Betonstützen beschrieben. Stahl 1 (Tab. 1) wurde im Elektrostahlwerk (Elektroofen zum Aufschmelzen von Stahlschrott, Pfannenstand für die sekundärmetallurgische Behandlung, kontinuierliche Stranggussanlage zur Herstellung von 150x150 mm$^2$-Knüppeln) hergestellt.

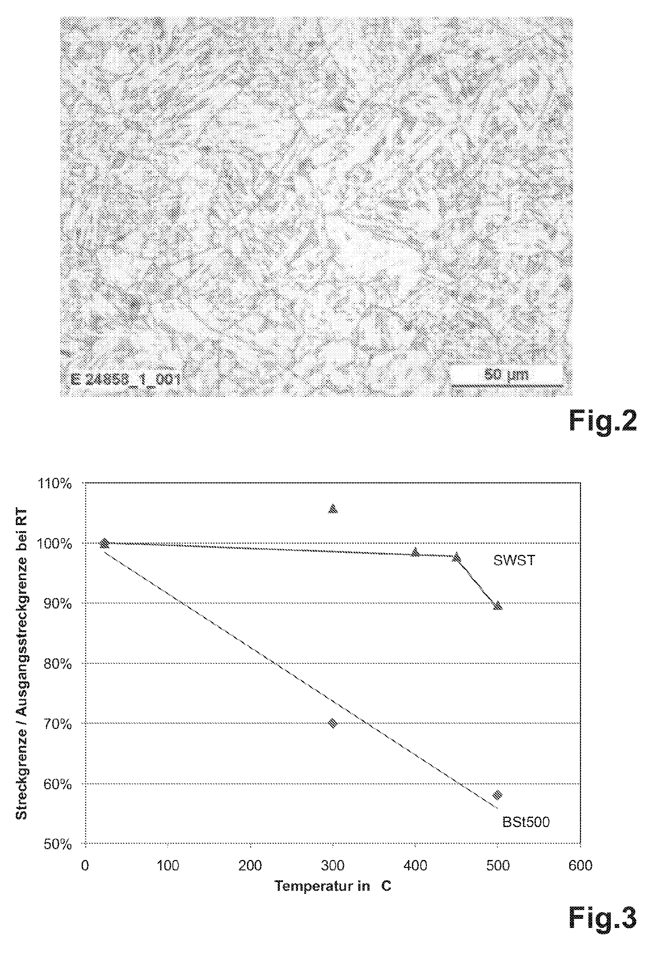

Die chemische Zusammensetzung von Stahl 1 garantiert eine hohe Bainit-starttemperatur (Bs = 1'103 - 270·x (C) - 90·x(Mn) - 70·x(Cr) - 37·x(Ni) - 83·x(Mo) = 903 K). Zur Ermittlung der Werkstoffeigenschaften wurde ein Walzstahl mit Durchmesser 22 mm auf einer konventionellen Walzstrasse hergestellt. Damit das benötigte bainitische Gefüge eingestellt werden konnte, wurde der Draht nach der letzten Umformung auf ein Stelmor-Förderband gelegt und mit bewegter Luft beschleunigt abgekühlt. (Kühlrate ~ 1 K/s). Das resultierende Gefüge besteht zu ~90 % aus einem granularen oberen Bainit (Fig. 2).

Fig. 3 zeigt, dass die temperaturabhängige Streckgrenze von Stahl 1 bis zu einer Temperatur von 450 °C praktisch konstant ist, während die Streckgrenze des Referenzwerkstoffs BSt500 gemäss DIN 488 bereits 40% tiefer liegt als bei Raumtemperatur.

Wie sich die Temperaturabhängigkeit der mechanischen Eigenschaften auf die Feuerwiderstandsklasse auswirkt, wurde für stahlbewehrte Betonstützen gemäss EN 1992-1-2 Anhang B.3.2 (zur Berechnung der Knicklasten) ermittelt. Die Untersuchung wurde an 10 Stützen mit unterschiedlichem Bewehrungsanteil durchgeführt:

Stützentyp 1: B=L=400 mm, H=3'000 mm, Bewehrung 0.8% (4 ∅20)
Stützentyp 2a: B=L=400 mm, H=3'000 mm, Bewehrung 2.7% (8 ∅26)
Stützentyp 2b: B=L=360 mm, H=3'000 mm, Bewehrung 3.2% (8 ∅26)
Stützentyp 2c: B=L=300 mm, H=3'000 mm, Bewehrung 4.7% (8 ∅26)
Stützentyp 2d: B=L=250 mm, H=3'000 mm, Bewehrung 6.8% (8 ∅26)
Stützentyp 3: B=L=400 mm, H=3'000 mm, Bewehrung 18.6% (20 ∅40)

Stützentyp 4: B=L=360 mm, H=3'000 mm, Bewehrung 14.0% (20 ∅34)
Stützentyp 5: B=L=300 mm, H=3'000 mm, Bewehrung 16.7% (12 ∅40)
Stützentyp 6: B=L=250 mm, H=3'000 mm, Bewehrung 21.1 % (12 ∅34)
Stützentyp 7: B=L=200 mm, H=3'000 mm, Bewehrung 18.9% (12 ∅26)

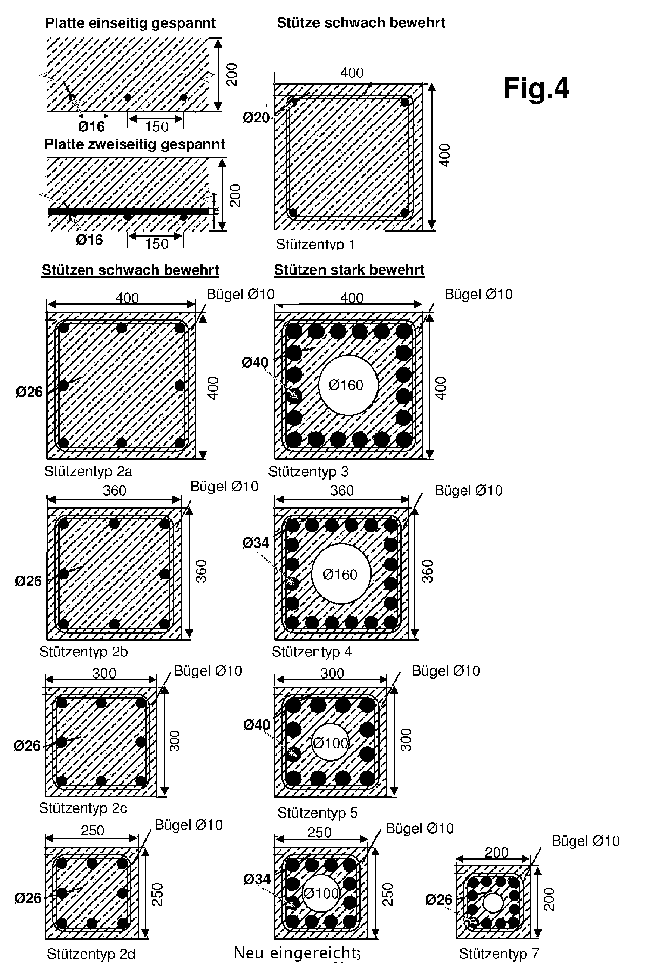

Fig. 4 zeigt schematisch, wie die Stahlbeton-Stützen im Querschnitt aussehen. Zusätzlich zur Bewehrungsgrad wurde auch die Betonüberdeckung variiert ($C_{nom}$=10, 20 und 30 mm). Diese entscheidet über die Temperaturen der Stahlbewehrung im Brandfall.

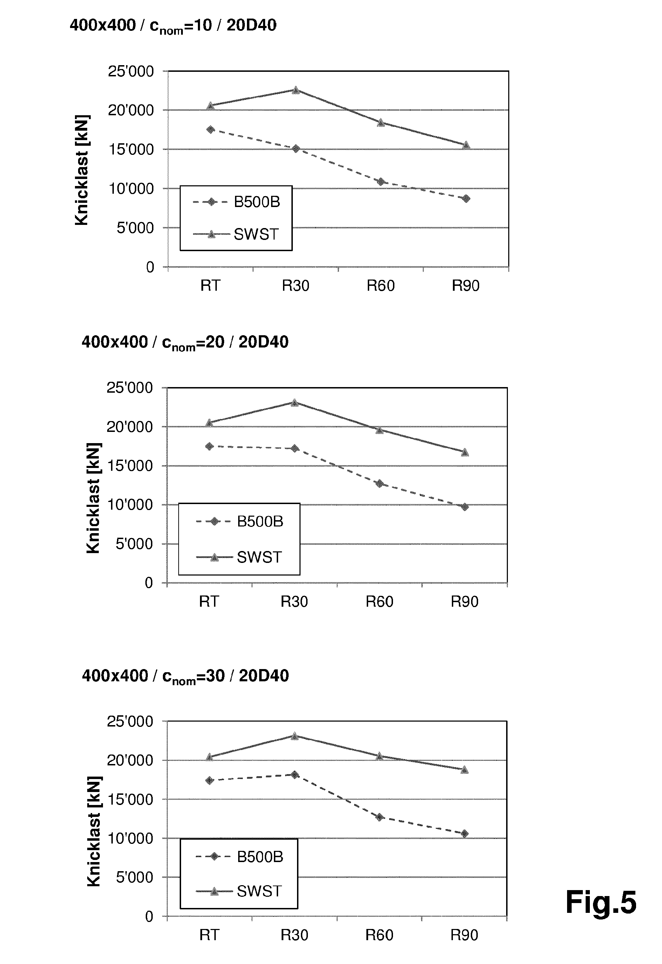

Als Beispiel ist in Fig. 5 das Ergebnis für eine 400x400 mm$^2$ Stütze mit 20 Bewehrungsstäben (40 mm Durchmesser) bei variabler Betonüberdeckung gezeigt. Die Knicklast (nach EN 1992-1-2 Anhang B.3.2) bei Raumtemperatur ist für die beiden Stähle ähnlich. Im Brandfall fällt diese für den Referenzwerkstoff BSt500 massiv ab, während der Abfall bei Stahl 1 lediglich 10 bis 25 % (bei 10 mm Betonüberdeckung) beträgt.

**Patentansprüche**

1. Stahlbewehrung für Stahlbetonteile, gebildet aus warmgewalzten profilierten Stahlelementen mit einem Gewichtsanteil von

    - 0.06 bis 0.20% Kohlenstoff (C),
    - 0.05 bis 0.80% Silizium (Si),
    - 1.50 % < Mangan (Mn) + Chrom (Cr) < 3.00%
    - bis zu 0.40% Nickel (Ni),
    - bis zu 0.50% Molybdän (Mo),
    - bis zu 0.30% Kupfer (Cu),
    - bis zu 0.05% Schwefel (S),
    - bis zu 0.10% Titan (Ti),
    - bis zu 0.003 % Bor (B),
    - bis zu 0.06 % Vanadium (V),
    - bis zu 0.06 % Niob (Nb),
    - bis zu 0.04% Aluminium (Al),
    - bis zu 0.05% Phosphor (P),
    - 0.008 bis 0.015% Stickstoff (N)

der Rest Eisen sowie stahlübliche Verunreinigungen,
**gekennzeichnet durch** ein über dem Querschnitt weitgehend homogenes Gefüge mit folgenden Gefügebestandteilen:

    - 60 bis 95% oberer Bainit,
    - bis zu 30% Ferrit,
    - bis 10% Martensit und
    - bis zu 5% Restaustenit.

2. Stahlbewehrung nach Anspruch 1, **dadurch gekennzeichnet, dass** die prozentualen Gewichtsanteile x(i) von Kohlenstoff, Mangan, Chrom, Nickel und Molybdän die folgende Bedingung erfüllen:

$$840 < Bs = 1'103 - 270 \cdot x(C) - 90 \cdot x(Mn) - 70 \cdot x(Cr) - 37 \cdot x(Ni) - 83 \cdot x(Mo) < 950$$

3. Stahlbewehrung nach Anspruch 1 oder 2 mit einer 0.2% Dehngrenze Rp0.2 bei 500°C von 400 bis 500 MPa.

4. Stahlbewehrung nach einem der Ansprüche 1 bis 3 mit einem Titangehalt von 0.04 bis 0.10 %.

5. Stahlbewehrung nach einem der Ansprüche 1 bis 4 mit einem Borgehalt von 0.0015 bis 0.0030 %.

6. Stahlbewehrung nach einem der Ansprüche 1 bis 5 mit einem Vanadiumgehalt von 0.02 bis 0.06 %.

7. Stahlbewehrung nach einem der Ansprüche 1 bis 6 mit einem Niobgehalt von 0.02 bis 0.06 %.

8. Stahlbewehrung nach einem der Ansprüche 1 bis 7 zur Verwendung in Tübbingen für den Tunnelbau.

9. Stahlbewehrung nach einem der Ansprüche 1 bis 7 zur Verwendung in Stützen und Masten.

10. Stahlbewehrung nach einem der Ansprüche 1 bis 7 zur Verwendung in Betonelementen im Hochbau.

11. Verfahren zur Herstellung von warmgewalzten profilierten Stahlelementen für eine Stahlbewehrung nach einem der Ansprüche 1 bis 10, wobei man einen Stahl mit einem Gewichtsanteil von:

    - 0.06 bis 0.20% Kohlenstoff (C),
    - 0.05 bis 0.80% Silizium (Si),
    - 1.50 % < Mangan (Mn) + Chrom (Cr) < 3.00%
    - bis zu 0.40% Nickel (Ni),
    - bis zu 0.50% Molybdän (Mo),
    - bis zu 0.30% Kupfer (Cu),
    - bis zu 0.05% Schwefel (S),
    - bis zu 0.10% Titan (Ti),
    - bis zu 0.003 % Bor (B),
    - bis zu 0.06 % Vanadium (V),
    - bis zu 0.06 % Niob (Nb),
    - bis zu 0.04% Aluminium (Al),
    - bis zu 0.05% Phosphor (P),
    - 0.008 bis 0.015 % Stickstoff (N)

der Rest Eisen sowie stahlübliche Verunreinigungen,
einer Warmumformung bei 900 bis 1300°C unterzieht und danach an Luft abkühlt,
wobei die Abkühlung aus der Umformhitze an ruhender oder bewegter Luft so geschieht, dass der Temperaturbereich zwischen 800 und 500°C mit einer Kühlrate von 0.5 bis 3.0 K/s durchlaufen wird,
wobei die mittlere Austenitkorngrösse nach dem letzten Warmumformungschritt kleiner ist wie 50 $\mu$m, und
wobei das erforderliche Festigkeitsniveau ohne zusätzliche Kaltumformung erreicht wird.

Fig.1

**Fig.2**

**Fig.3**

**Fig.4**

**Platte einseitig gespannt**

Ø16  150  200

**Platte zweiseitig gespannt**

Ø16  150  200

**Stütze schwach bewehrt**

400

Ø20

400

Stützentyp 1

**Stützen schwach bewehrt**

Bügel Ø10
400
Ø26
400
Stützentyp 2a

360
Ø26
360
Stützentyp 2b  Bügel Ø10

300
Ø26
300
Stützentyp 2c  Bügel Ø10

250
Ø26
250
Stützentyp 2d  Bügel Ø10

**Stützen stark bewehrt**

Bügel Ø10
400
Ø40
Ø160
400
Stützentyp 3

360  Bügel Ø10
Ø34
Ø160
360
Stützentyp 4

300  Bügel Ø10
Ø40
Ø100
300
Stützentyp 5

250  Bügel Ø10
Ø34
Ø100
250
Neu eingereicht

200  Bügel Ø10
Ø26
200
Stützentyp 7

**400x400 / $c_{nom}$=10 / 20D40**

**400x400 / $c_{nom}$=20 / 20D40**

**400x400 / $c_{nom}$=30 / 20D40**

**Fig.5**

EP 2 557 184 A1

**Europäisches Patentamt**
**European Patent Office**
**Office européen des brevets**

# EUROPÄISCHER RECHERCHENBERICHT

**Nummer der Anmeldung**

EP 11 17 7111

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2010/112611 A1 (SWISS STEEL AG [CH]; KRUSE JOCHEN [DE]; URLAU ULRICH [CH]; HASLER STEP) 7. Oktober 2010 (2010-10-07) * Ansprüche 1-19; Beispiele 1,2 * ----- | 1-11 | INV. C21D8/06 C21D8/08 C22C38/00 C22C38/04 |
| X | JP 9 209074 A (KOBE STEEL LTD) 12. August 1997 (1997-08-12) * Zusammenfassung; Beispiel 13; Tabellen 1-4 * ----- | 1-11 | C22C38/14 C22C38/32 |
| A | EP 2 199 422 A1 (SWISS STEEL AG [CH]; ARCELORMITTAL HAMBURG GMBH [DE]; INST METALLURGII) 23. Juni 2010 (2010-06-23) * Ansprüche 1-5; Tabellen 1-5 * ----- | 1-11 | |
| A | US 2004/149359 A1 (MICHAUD HERVE [FR] ET AL) 5. August 2004 (2004-08-05) * Ansprüche 1-17 * ----- | 1-11 | |
| A | JP 11 131188 A (NIPPON STEEL CORP) 18. Mai 1999 (1999-05-18) * Zusammenfassung; Tabellen 1-3 * ----- | 1-11 | **RECHERCHIERTE SACHGEBIETE (IPC)** C21D C22C |
| A | JP 9 165621 A (NIPPON KOKAN KK) 24. Juni 1997 (1997-06-24) * Zusammenfassung; Tabellen 1-4 * ----- | 1-11 | |
| A | US 5 554 233 A (HEITMANN WILLIAM E [US] ET AL) 10. September 1996 (1996-09-10) * Ansprüche 1-50 * ----- | 1-11 | |

Der vorliegende Recherchenbericht wurde für alle Patentansprüche erstellt

| Recherchenort | Abschlußdatum der Recherche | Prüfer |
|---|---|---|
| München | 11. Januar 2012 | Catana, Cosmin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 17 7111

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-01-2012

| Im Recherchenbericht angeführtes Patentdokument | Datum der Veröffentlichung | Mitglied(er) der Patentfamilie | Datum der Veröffentlichung |
|---|---|---|---|
| WO 2010112611 A1 | 07-10-2010 | DE 102009016079 A1<br>WO 2010112611 A1 | 14-10-2010<br>07-10-2010 |
| JP 9209074 A | 12-08-1997 | JP 2973909 B2<br>JP 9209074 A | 08-11-1999<br>12-08-1997 |
| EP 2199422 A1 | 23-06-2010 | KEINE | |
| US 2004149359 A1 | 05-08-2004 | AT 437968 T<br>CA 2452629 A1<br>CN 1511673 A<br>EP 1426453 A1<br>ES 2330209 T3<br>FR 2847910 A1<br>JP 2004183101 A<br>MX PA03011104 A<br>PL 363855 A1<br>US 2004149359 A1 | 15-08-2009<br>03-06-2004<br>14-07-2004<br>09-06-2004<br>07-12-2009<br>04-06-2004<br>02-07-2004<br>07-12-2004<br>14-06-2004<br>05-08-2004 |
| JP 11131188 A | 18-05-1999 | JP 3863647 B2<br>JP 11131188 A | 27-12-2006<br>18-05-1999 |
| JP 9165621 A | 24-06-1997 | KEINE | |
| US 5554233 A | 10-09-1996 | CA 2135255 A1<br>US 5554233 A | 27-11-1995<br>10-09-1996 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- GB 2388845 A
- EP 2065481 A

- US 20110002808 A

### In der Beschreibung aufgeführte Nicht-Patentliteratur

- **W. STEVEN ; A.J. HAYNES.** *JISI,* 1956, vol. 183, 349-359